# EUROPEAN PATENT APPLICATION

(11) **EP 4 571 965 A1**
(43) Date of publication of application: **18.06.2025**
(21) Application number: 24219366.2
(22) Date of filing: 12.12.2024
(51) Int. Cl.: H01M 50/169, H01M 50/103, H01M 50/15, B23K 1/18, B23K 101/12, B23K 101/36

(54) **BATTERY SHELL, BATTERY, BATTERY PACK, AND POWER CONSUMING SYSTEM**

(30) Priority: 12.12.2023 CN 202323414807 U
(71) Applicant: BYD Company Limited, Shenzhen, Guangdong 518118 (CN)
(72) Inventor: SU, Hanqing, Shenzhen, 518118 (CN); XING, Wenqing, Shenzhen, 518118 (CN); LIU, Meng, Shenzhen, 518118 (CN); LIU, Xingpeng, Shenzhen, 518118 (CN)
(74) Representative: Mathys & Squire

(57) **Abstract**

The present disclosure relates to a battery shell, a battery, a battery pack, and a power consuming system. The battery and a battery pack shell form the battery pack to supply power to the power consuming system, and the battery shell of the battery includes a housing and a cover plate. The housing includes an inner cavity, the inner cavity has an opening, the cover plate is fixed to the housing, and the cover plate covers the opening of the inner cavity. A first groove is provided on at least one of a surface of the cover plate facing the housing and a surface of the housing facing the cover plate, a brazing seam is provided between the cover plate and the housing, and the brazing seam is configured to connect the housing to the cover plate fixedly to seal the inner cavity. The first groove is adapted to accommodate solder for forming the brazing seam. The battery shell of the present disclosure is formed through brazing, thereby reducing soldering difficulty, reducing manufacturing costs, and reducing residual stress and a failure risk after soldering.

## Description

### FIELD

The present disclosure relates to the field of battery shells, and in particular, to a battery shell, a battery, a battery pack, and a power consuming system.

### BACKGROUND

In the related art, a battery shell of a battery is formed by a battery housing and a battery cover plate through soldering, to seal an inner cavity of the battery. To meet a sealing performance requirement, during assembly, a requirement on a gap between the cover plate and the housing is high, leading to an increase in a requirement on processing precision of the shell and difficulty of a manufacturing process, and increasing processing costs.

In a process of eliminating the gap on the shell through soldering, since the cover plate and the housing have complex structures, soldering difficulty is high, and the housing is thin, the housing and the cover plate can hardly fill up the gap after being molten, leading to poor soldering problems such as soldering holes or the housing and the cover plate are not fused. A poorly soldered battery shell cannot meet the sealing performance requirement. In addition, by melting and then solidifying the housing and the cover plate, residual stress and cracks may be easily caused, increasing a failure risk of the shell.

### SUMMARY

In view of the technical problems existing in the foregoing description, the present disclosure provides a battery shell, a battery, a battery pack, and a power consuming system. Specifically, the following technical solutions are included:

According to a first aspect, the present disclosure provides a battery shell, including a housing and a cover plate.

The housing includes an inner cavity, the inner cavity has an opening, the cover plate is fixed to the housing, and the cover plate covers the opening of the inner cavity. A first groove is provided on at least one of a surface of the cover plate facing the housing and a surface of the housing facing the cover plate, a brazing seam is provided between the cover plate and the housing, the brazing seam is configured to fix the housing and the cover plate to cause the cover plate to seal the inner cavity, and the first groove is adapted to accommodate solder for forming the brazing seam.

The first groove accommodating the solder is provided in the battery shell of the present disclosure, and the solder is molten through heating after the cover plate and the housing are assembled, to form the brazing seam structure and fill a gap between the cover plate and the housing. In this way, the inner cavity is sealed while the cover plate and the housing are fixedly connected.

An operation for soldering the battery shell of the present disclosure is simple, and a melting point of the solder is lower than that of the battery shell. During soldering, the solder is molten while the battery shell is not molten, so that residual stress generated after soldering is small, there reducing a failure risk of the battery shell.

In an embodiment, the first groove is located on the surface of the cover plate facing the housing.

In this embodiment, the first groove is located on the cover plate, the solder is arranged in the first groove, and the solder in the cover plate is molten after soldering to form the brazing seam.

In an embodiment, a protrusion is arranged on a side of the cover plate facing the inner cavity, an outer side wall of the protrusion is contact with an inner surface of the inner cavity, and the first groove is located on the outer side wall of the protrusion.

In this embodiment, the cover plate includes the protrusion, the protrusion extends into the inner cavity, the outer side wall of the protrusion is in contact with the inner surface of the inner cavity, the first groove is located on the outer side wall of the protrusion, and the solder in the cover plate is molten after soldering to form the brazing seam, so that the protrusion is fixedly connected to the housing.

In an embodiment, the cover plate further comprises a first surface facing the inner cavity, the first surface is provided around the protrusion, the first groove includes a top surface facing the first surface, and a distance between the top surface and the first surface decreases along a vertical direction from a middle portion of the cover plate to the inner surface of the inner cavity.

In this embodiment, the cover plate is located below the housing during soldering, and the top surface of the first groove inclines, so that the molten solder can flow toward the cover plate under the action of gravity, thereby preventing the solder from flowing into the inner cavity.

In an embodiment, a thickness of an edge portion of the cover plate increases along the vertical direction from the middle portion of the cover plate to the inner surface of the inner cavity.

In this embodiment, it is set that the edge portion of the cover plate inclines inward, and the molten solder retains at a protruding edge, so that a sufficient thickness of the brazing seam is formed on a side away from the inner cavity, thereby ensuring soldering quality.

In an embodiment, the cover plate further comprises a first surface facing the inner cavity, the first surface is provided around the protrusion, the first groove includes a bottom surface away from the first surface, and the brazing seam is higher than or flush with the bottom surface along a vertical direction.

In this embodiment, the cover plate is located below the housing during soldering, the molten solder flows from the first groove into the gap and flows along a direction toward the cover plate under the action of gravity, and the brazing seam after cooling and solidifying is higher than or flush with the bottom surface of the first groove.

In an embodiment, the housing includes an isolating ring, the isolating ring is arranged on the inner surface of the inner cavity and extends toward a center of the inner cavity, and an extension length of the isolating ring is greater than a spacing distance between the protrusion and the inner surface of the inner cavity.

In this embodiment, the cover plate is located above the housing during soldering, and the isolating ring is arranged on the inner surface of the inner cavity to prevent the molten solder from further flowing toward the inner cavity.

In an embodiment, an inner edge of the isolating ring is located above an outer edge of the isolating ring along the vertical direction; or
the isolating ring extends along a horizontal direction and is provided with a second groove, and the second groove is located on a surface of the isolating ring facing the cover plate.

In this embodiment, it is set that the isolating ring inclines or the second groove is provided on the surface of the isolating ring facing the cover plate to retain the solder, thereby preventing the molten solder from overflowing the isolating ring.

In an embodiment, the cover plate further comprises a first surface facing the inner cavity, the first surface is provided around the protrusion, the cover plate includes a third groove, the third groove is located on the first surface, and the third groove is provided on an outer side of the protrusion along a circumferential direction.

In this embodiment, the cover plate is provided with the third groove, the third groove is provided on the outer side of the protrusion along the circumferential direction, and the third groove accommodates the solder, so that the cover plate can also be fixedly connected to the housing after soldering.

In an embodiment, a gap exists between the two surfaces of the cover plate and the housing that are in contact with each other, and the brazing seam is located in the gap to connect the cover plate and the housing in a sealed manner.

In this embodiment, the cover plate is in contact with the housing, a gap exists between the surfaces that are in contact with each other, the gap is filled after the solder is molten to form the brazing seam, and the brazing seam connect the cover plate and the housing in a sealed manner.

In an embodiment, the brazing seam is provided in the first groove.

In this embodiment, after the solder in the first groove is molten, at least part of the solder retains in the first groove, and the brazing seam is formed after the solder is cooled.

In an embodiment, a thickness of a side wall of the housing ranges from 0.05 mm to 0.2 mm.

In an embodiment, a material of the battery shell is aluminum or steel.

In this embodiment, a battery shell made of aluminum or steel is used to ensure a strength of the battery shell, and a melting point of the battery shell is higher than the melting point of the solder, thereby ensuring that the battery shell is not molten during soldering.

According to a second aspect, the present disclosure further relates to a battery. The battery includes a battery core and the battery shell according to any one of the foregoing embodiments, and the battery core is fixed in the inner cavity of the battery shell.

Because the battery provided in the second aspect of the present disclosure uses the battery shell provided in the first aspect of the present disclosure, an assembly process is simpler, and the reliability of the battery shell can be improved and a sealing protection effect of the battery shell to the battery core can be ensured.

According to a third aspect, the present disclosure further relates to a battery pack. The battery pack includes a battery pack shell and the foregoing battery, and the battery is arranged in the battery pack shell.

According to a fourth aspect, the present disclosure further relates to a power consuming system, including the foregoing battery pack or the foregoing battery. The battery pack or the battery is arranged in the power consuming system and is configured to supply power to the power consuming system.

By using the foregoing battery, the battery pack and the power consuming system in the present disclosure can obtain higher security and reliability and have a longer service life.

### BRIEF DESCRIPTION OF THE DRAWINGS

FIG. 1 is a schematic diagram of a structure of a battery shell according to an embodiment of the present disclosure;
FIG. 2 is a schematic diagram of an internal cross-sectional structure of a battery shell according to an embodiment of the present disclosure;
FIG. 3 is a schematic partial diagram of an internal cross-sectional structure of a battery shell according to an embodiment of the present disclosure;
FIG. 4 is a schematic partial diagram of an internal cross-sectional structure of a battery shell before soldering according to an embodiment of the present disclosure;
FIG. 5 is a schematic partial diagram of an internal cross-sectional structure of a battery shell according to another embodiment of the present disclosure;
FIG. 6 is a schematic partial diagram of an internal cross-sectional structure of a battery shell according to another embodiment of the present disclosure; and
FIG. 7 is a schematic partial diagram of an internal cross-sectional structure of a battery shell according to another embodiment of the present disclosure.

### DETAILED DESCRIPTION

For ease of understanding the present disclosure, the present disclosure is described more comprehensively below with reference to related accompanying drawings. Preferred implementations of the present disclosure are given in the accompanying drawings. However, the present disclosure may be implemented in many different forms and is not limited to the implementations described in this specification. Conversely, the implementations are provided to make understanding of the disclosed content of the present disclosure more thorough and comprehensive.

The following embodiments are described with reference to the accompanying drawings, and are used to exemplify specific embodiments that the present disclosure can be used to implement. The serial numbers for the components in this specification, for example, "first" and "second", are merely used for distinguishing the described objects, and do not have any order or technical meaning. The terms "connection" and "coupling" described in the present disclosure include direct and indirect connection (coupling) unless otherwise specified. The directional terms mentioned in the present disclosure, for example, "upper", "lower", "front", "rear", "left", "right", "inner", "outer", and "side surface", are merely directions with reference to the accompanying drawings, so that the directional terms are used to better and more clearly describe and understand the present disclosure rather than indicating or implying that the mentioned apparatus or element must have a specific orientation or constructed and operated according to a specific orientation, and therefore cannot construed as a limitation to the present disclosure.

The present disclosure relates to a power consuming system. The power consuming system includes a battery pack or a battery configured to supply power, the battery pack includes a battery and a battery pack shell, the battery includes a battery core and a battery shell, the battery core is fixed in an inner cavity of the battery shell, and the battery shell is configured to seal and protect the battery core in the battery shell. The battery in the present disclosure may be arranged in the power consuming system, the battery core is configured to supply power to the power consuming system, and the battery shell is configured to seal the battery core, to prevent external liquid and air from entering the inner cavity and maintain a stable operating environment of the battery core.

To meet a sealing performance requirement of the battery, the battery shell has high requirements on manufacturing and assembly precision and soldering precision. In addition, because a thickness of the battery shell is excessively thin, it is difficult to solder the battery shell and it is difficult to ensure the soldering quality. In the present disclosure, the battery shell is soldered by using built-in solder to form a brazing seam to achieve sealing and protection of the battery shell. The difficulty of soldering is relatively low, and a simple soldering step is required, so that the manufacturing efficiency of the battery shell can be improved. In addition, compared with ordinary soldering, residual stress of the battery shell after brazing is small, which can reduce a failure risk of the battery shell and improve the reliability of the battery shell.

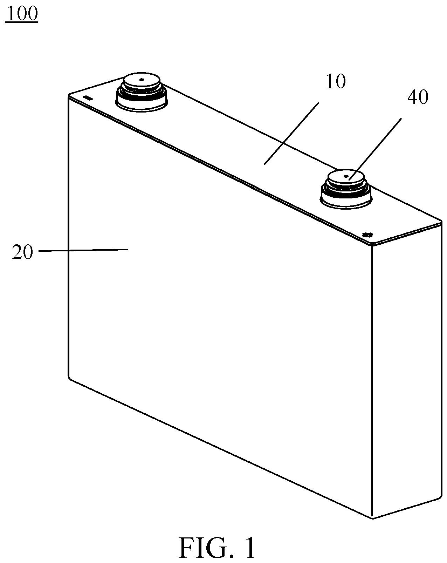

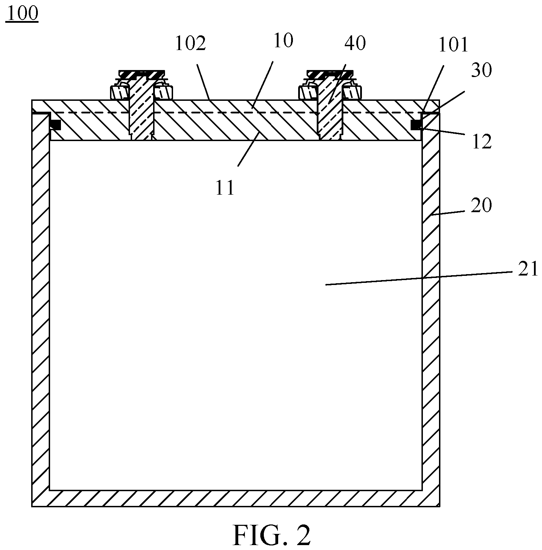

Referring to FIG. 1 and FIG. 2, FIG. 1 shows a schematic diagram of a structure of a battery shell 100 according to an embodiment of the present disclosure, and FIG. 2 shows a schematic diagram of an internal cross-sectional structure of a battery shell 100.

The battery shell 100 provided in the present disclosure includes a cover plate 10 and a housing 20. The housing 20 includes an inner cavity 21, the inner cavity 21 has an opening, and the cover plate 10 is fixed to an opening side of the housing 20 and covers the opening of the inner cavity 21. The cover plate 10 is connected to the housing 20 in a sealed manner, and the inner cavity 21 is configured to accommodate a battery core. The battery shell 100 is further provided with two electrodes 40 spaced apart from each other. The two electrodes 40 are electrically connected the battery core separately, and pass through the shell 100 separately, so that the battery core in the shell 100 can be connected to an external circuit and provide or receive electrical energy.

In the schematic diagrams of FIG. 1 and FIG. 2, two electrodes 40 are spaced apart at the cover plate 10. In some other embodiments, at least one of the two electrodes 40 may be further arranged on the housing 20. A specific position of the electrode 40 may be arbitrarily set based on an operating scenario of the battery of the present disclosure.

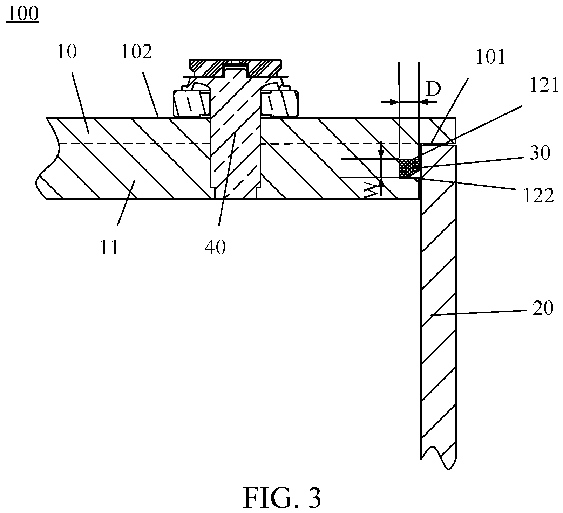

FIG. 3 shows a schematic partial diagram of an internal cross-sectional structure of a battery shell 100.

The cover plate 10 is approximately plate-shaped. Specifically, in an embodiment, the cover plate 10 has a first surface 101 facing the inner cavity 21, a protrusion 11 is arranged on a side of the cover plate 10 facing the inner cavity 21, and the protrusion 11 extends from the cover plate 10 toward the inner cavity 21. Along an extension direction perpendicular to the protrusion 11, the protrusion 11 is spaced apart from the housing 20, that is, an outer side wall of the protrusion 11 is spaced apart from an inner surface of the inner cavity 21 and a gap exists therebetween.

A first groove 12 is provided on at least one of a surface of the cover plate 10 facing the housing 20 and a surface of the housing 20 facing the cover plate 10, a brazing seam 30 is provided between the cover plate 10 and the housing 20, the brazing seam 30 is fixedly connected to the cover plate 10 and the housing 20 and seals the inner cavity 21, and the first groove 12 is adapted to accommodate solder for forming the brazing seam 30. Specifically, in an embodiment, the cover plate 10 has a protrusion 11 facing the inner cavity 21, a first groove 12 is provided on an outer side wall of the protrusion 11, and the first groove 12 extends toward a geometric center of the cover plate 10 along an extension direction perpendicular to the protrusion 11. A brazing seam 30 is provided between the outer side wall of the protrusion 11 and an inner surface of the inner cavity 21, and the brazing seam 30 is configured to connect the cover plate 10 to the housing 20 fixedly, so that the cover plate 10 seals the inner cavity 21.

Further, in an embodiment, since the first groove 12 accommodates solder 30a for forming the brazing seam 30, and the brazing seam 30 is provided between the cover plate 10 and the housing 20, the surface of the cover plate 10 facing the housing 20 is a surface through which the cover plate 10 is in contact with the housing 20, and the surface of the housing 20 facing the cover plate 10 is a surface through which the housing 20 is in contact with the cover plate 10. In this way, the solder 30a accommodated in the first groove 12 is molten at a high temperature and then filled between the cover plate 10 and the housing 20 to form the brazing seam 30, thereby achieving a sealed connection between the cover plate 10 and the housing 20. In this embodiment, contact between the cover plate 10 and the housing 20 may be direct contact, that is, the cover plate 10 and the housing 20 are attached to each other without another substance therebetween. In addition, the contact may alternatively be indirect contact, that is, the cover plate and the housing are attached to each other through another substance, for example, the brazing seam 30, an insulating member, or the like.

In addition, in other embodiments, an objective of providing the first groove 12 is to ensure that after the solder 30a is arranged in the first groove 12, the solder can be molten at a high temperature and then filled between the cover plate 10 and the housing 20 to form the brazing seam 30, thereby achieving a sealed connection between the cover plate 10 and the housing 20. Therefore, the surface of the cover plate 10 facing the housing 20 may also be a surface of the cover plate 10 facing the inner cavity 21, and the surface of the housing 20 facing the cover plate 10 may also be a surface of the inner cavity 21 of the housing 20. That is, after the first groove 12 is provided on the surface, the solder 30a may flow into space between the cover plate 10 and the housing 20 through the surface to form the brazing seam 30.

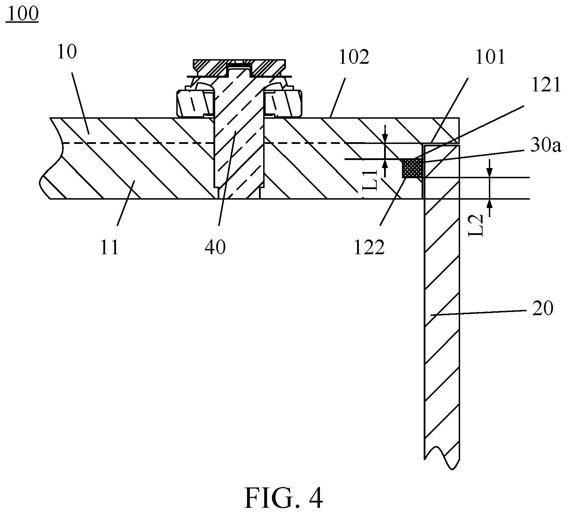

Specifically, FIG. 4 shows a schematic partial diagram of an internal cross-sectional structure of a battery shell 100 before soldering.

In some embodiments, as shown in FIG. 4, the solder 30a is filled in the first groove 12, and the brazing seam 30 is formed by the solder 30a through soldering. In this embodiment, the solder 30a fills up the first groove 12. In some other embodiments, the solder 30a may not fill up the first groove 12. A volume of the solder 30a arranged in the first groove 12 may be adjusted based on a size of the gap between the cover plate 10 and the housing 20.

Specifically, in a manufacturing process of the battery shell 100 of the present disclosure, an example in which the first groove 12 is located on the cover plate 10 is used. First, the solder 30a is placed in the first groove 12 of the cover plate 10. Then, the cover plate 10 and the housing 20 are assembled, and the protrusion 11 of the cover plate 10 first extends into the inner cavity 21 to guide the assembly of the cover plate 10 and the housing 20. A gap exists between the assembled cover plate 10 and the assembled housing 20 along a horizontal direction. Finally, the solder 30a arranged in advance in the first groove 12 is heated. Under the action of gravity, the molten solder 30a flows from the first groove 12 into and fills the gap between the cover plate 10 and the housing 20. After the solder 30a is cooled and solidified, the brazing seam 30 is formed. The brazing seam 30 connects the cover plate 10 to the housing 20 fixedly, and may separate the inner cavity 21 from the outside, to ensure the sealing performance of the battery shell 100.

It may be understood that, in a soldering process of the battery shell 100 of the present disclosure, the solder 30a is arranged in advance in the first groove 12. It is only necessary to heat to melt the solder 30a, so that the molten solder 30a flows into the gap between the cover plate 10 and the housing 20 under the action of gravity. After the solder 30a is cooled and solidified, the brazing seam 30 is formed, so that the cover plate 10 and the housing 20 are fixedly connected, and the inner cavity 21 is sealed. In the soldering process of the battery shell 100 of the present disclosure, steps required for soldering can be reduced, to reduce the soldering difficulty and simplify soldering operations. In addition, the solder 30a is arranged in advance in the first groove 12, so that operation steps in a processing process are reduced, the process difficulty is reduced, and the manufacturing efficiency of the battery shell 100 can be improved.

In addition, brazing is adopted in the battery shell 100 of the present disclosure, a melting point of the solder 30a is lower than those of the cover plate 10 and the housing 20. Therefore, only the solder 30a is molten during the soldering process, and the cover plate 10 and the housing 20 are not molten, thereby ensuring the integrity of the appearance of the cover plate 10 and the housing 20. In addition, during the soldering process of the battery shell 100, only the solder 30a is molten and then solidified, which can reduce residual stress generated after the soldering, and reduce deformation of the battery shell 100 caused by the soldering, thereby reducing a failure risk of the battery shell 100.

Therefore, the soldering process of the battery shell 100 of the battery of the present disclosure can be simpler, and the production efficiency of the battery shell 100 can be improved. In addition, the battery shell 100 can reduce the residual stress after the soldering and reduce the failure risk of the battery shell, thereby improving the reliability of the battery shell 100, to ensure a longer-term sealing and protection effect to the battery core.

In an embodiment, the protrusion 11 is arranged on the cover plate 10, the outer side wall of the protrusion 11 is in contact with the inner surface of the inner cavity 21, the first groove 12 is located on the outer side wall of the protrusion 11, and the solder 30a is arranged in the first groove 12. After soldering, the solder 30a forms the brazing seam 30, and the brazing seam 30 can also connect the cover plate 10 to the housing 20 fixedly, and seal the inner cavity 21.

In another embodiment, the cover plate 10 includes a third groove, the third groove is located on the first surface 101 of the cover plate 10, the third groove is provided on an outer side of the protrusion 11 along a circumferential direction, and the solder 30a is arranged in the third groove. After soldering, the solder 30a forms the brazing seam 30, and the brazing seam 30 can also connect the cover plate 10 to the housing 20 fixedly, and seal the inner cavity 21.

In an embodiment, a side wall of the cover plate 10 is in contact with the housing 20, the first groove may be provided on the side wall of the cover plate 10, and the solder 30a is arranged in the first groove 12. After being soldered, the solder 30a forms the brazing seam 30, and the brazing seam 30 can also connect the cover plate 10 to the housing 20 fixedly and seal the inner cavity 21.

In another embodiment, the first groove 12 may alternatively be provided on the housing 20, the first groove 12 is located on an inner wall of the inner cavity 21, and the solder 30a is arranged in the first groove 12. After being soldered, the solder 30a forms the brazing seam 30, and the brazing seam 30 can also connect the cover plate 10 to the housing 20 fixedly and seal the inner cavity 21.

The cover plate 10 may be soldered to the housing 20 in two manners. In one manner, the cover plate 10 may be located below the housing 20 along a vertical direction during the soldering process. In another manner, the cover plate 10 may be located above the housing 20 along the vertical direction during the soldering process. Because the molten solder 30a has flowability during the soldering process, the solder 30a flows toward different directions under the action of gravity, so that there are also differences in shapes and positions of the brazing seam 30 formed in the two manners.

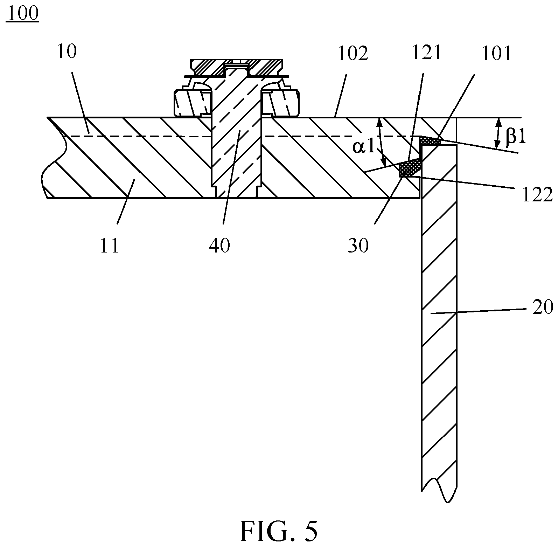

FIG. 5 is a schematic partial diagram of an internal cross-sectional structure of a battery shell 100 according to another embodiment of the present disclosure. In this embodiment, during the soldering process, the battery shell 100 is soldered and formed in the foregoing manner in which "the cover plate 10 is located below the housing 20 along the vertical direction".

Specifically, as shown in FIG. 5, the first groove 12 is located on a side wall of the protrusion 11, the first groove 12 includes a bottom surface 122 away from the first surface 101, and the brazing seam 30 is higher than or flush with the bottom surface 122 along the vertical direction. In this embodiment, when the cover plate 10 is soldered to the housing 20, the cover plate 10 is located below the housing 20 along the vertical direction, the molten solder 30a flows from the first groove 12 into the gap between the cover plate 10 and the housing 20 under the action of gravity, and flows toward the cover plate 10, thereby forming the brazing seam 30 that is higher than or flush with the bottom surface 122 along the vertical direction.

In an embodiment, as shown in FIG. 5, the first groove 12 includes a top surface 121 facing the first surface 101, and a distance between the top surface 121 and the first surface 101 decreases along a vertical direction from a middle portion of the cover plate 10 to the inner surface of the inner cavity 21. In this embodiment, when the cover plate 10 is soldered to the housing 20, the cover plate 10 is located below the housing 20 along the vertical direction, and the molten solder 30a flows toward the cover plate 10 under the action of gravity. It is set that the top surface 121 of the first groove 12 is inclined, so that the molten solder 30a flows into the gap between the cover plate 10 and the housing 20, thereby achieving soldering between the cover plate 10 and the housing 20.

In an embodiment, as shown in FIG. 5, the cover plate 10 includes an edge portion along an outer side of the outer side wall of the protrusion 11, and a thickness of the edge portion of the cover plate 10 increases along the vertical direction from the middle portion of the cover plate 10 to the inner surface of the inner cavity 21. In this embodiment, when the cover plate 10 is soldered to the housing 20, the cover plate 10 is located below the housing 20 along the vertical direction, and the molten solder 30a flows toward the cover plate 10 under the action of gravity. The inclined edge portion of the cover plate 10 and the outer side of the protrusion 11 form an accommodating region of the solder 30a. When the solder 30a flows to the edge portion of the cover plate 10, the inclined edge portion can retain the solder 30a, so that a sufficient thickness of the brazing seam 30 formed through cooling and solidifying is formed on a side away from the inner cavity 21, to ensure a sealing effect after the soldering.

In some other embodiments, the first groove 12 may alternatively be located on the side wall of the cover plate 10. It is set that a surface of the first groove 12 away from the first surface 101 is inclined, so that the molten solder 30a can also flow into the gap between the cover plate 10 and the housing 20, thereby achieving soldering between the cover plate 10 and the housing 20.

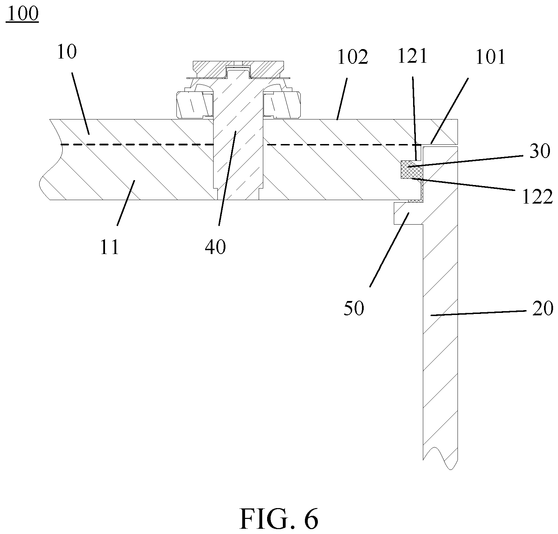

FIG. 6 is a schematic partial diagram of an internal cross-sectional structure of a battery shell according to another embodiment of the present disclosure. In this embodiment, during the soldering process, the battery shell 100 is soldered and formed in the foregoing manner in which "the cover plate 10 is located above the housing 20 along the vertical direction".

Specifically, as shown in FIG. 6, the brazing seam 30 is lower than or flush with the top surface 121 of the first groove 12 along the vertical direction. In this embodiment, when the cover plate 10 is soldered to the housing 20, the cover plate 10 is located above the housing 20 along the vertical direction. The molten solder 30a flows from the first groove 12 into the gap between the cover plate 10 and the housing 20 under the action of gravity, and flows toward the inner cavity 21. Then, the brazing seam 30 that is lower than or flush with the top surface 121 along the vertical direction is formed.

In an embodiment, as shown in FIG. 6, the housing 20 includes an isolating ring 50, the isolating ring 50 is arranged on the inner surface of the inner cavity 21 and extends toward a center of the inner cavity 21, and an extension length of the isolating ring 50 is greater than a spacing distance between the protrusion 11 and the inner surface of the inner cavity 21. In this embodiment, when the cover plate 10 is soldered to the housing 20, the cover plate 10 is located above the housing 20 along the vertical direction, and the molten solder 30a flows from the first groove 12 toward the inner cavity 21 under the action of gravity. After the solder 30a flows out of the gap between the cover plate 10 and the housing 20, the isolating ring 50 can block the solder 30a, to prevent the solder 30a from further flowing toward the inner cavity 21, and prevent the solder 30a at a relatively high temperature from approaching or coming in contact with the battery core in the inner cavity 21, destroying the battery core or affecting an operating environment of the battery core, and affecting normal operation of the battery core.

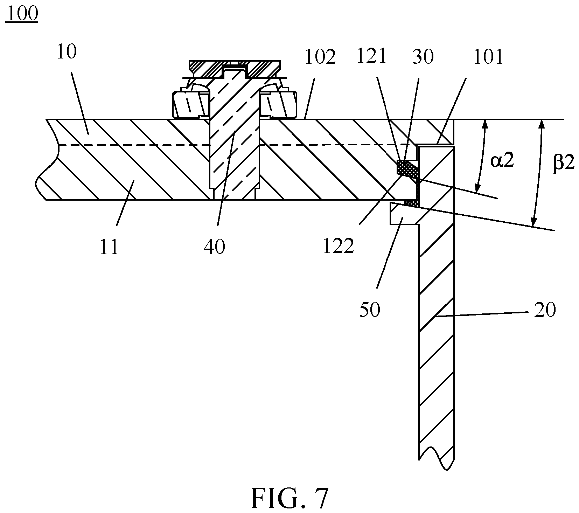

FIG. 7 is a schematic partial diagram of an internal cross-sectional structure of a battery shell 100 according to another embodiment of the present disclosure.

Specifically, as shown in FIG. 7, an inner edge of the isolating ring 50 is located above an outer edge of the isolating ring 50 along the vertical direction. In this embodiment, when the cover plate 10 is soldered to the housing 20, the cover plate 10 is located above the housing 20 along the vertical direction, and the molten solder 30a flows toward the inner cavity 21 under the action of gravity. The inclined isolating ring 50 and the inner surface of the inner cavity 21 form an accommodating region of the solder 30a, so that the solder 30a can retain in the isolating ring 50. Due to the retained solder 30a, a sufficient thickness of the brazing seam 30 formed by cooling and solidifying is formed on a side facing the inner cavity 21, thereby ensuring a sealing effect after the soldering.

In another embodiment, the isolating ring 50 extends along a horizontal direction and is provided with a second groove, and the second groove is located on a surface of the isolating ring 50 facing the cover plate 10. In this embodiment, when the cover plate 10 is soldered to the housing 20, the cover plate 10 is located above the housing 20 along the vertical direction, and the solder 30a flows toward the inner cavity 21 under the action of gravity. The second groove provided on the surface of the isolating ring 50 facing the cover plate 10 can also retain the molten solder 30a, and can also enable a sufficient thickness of the brazing seam 30 to be formed on the side facing the inner cavity 21, thereby ensuring a sealing effect after the soldering.

In an embodiment, as shown in FIG. 7, a distance between the bottom surface 122 and the first surface 101 increases along the vertical direction from the middle portion of the cover plate 10 to the inner surface of the inner cavity 21. In this embodiment, when the cover plate 10 is soldered to the housing 20, the cover plate 10 is located above the housing 20 along the vertical direction, and the molten solder 30a flows toward the inner cavity 21 under the action of gravity. The inclined bottom surface 122 of the first groove 12 is arranged, so that the molten solder 30a can flow into the gap between the cover plate 10 and the housing 20 under the action of gravity.

In some other embodiments, the first groove 12 may alternatively be located on the side wall of the cover plate 10. It is set that a surface of the first groove 12 facing the first surface 101 is inclined, so that the molten solder 30a can also flow into the gap between the cover plate 10 and the housing 20, thereby achieving soldering between the cover plate 10 and the housing 20.

In an embodiment, a thickness of a side wall of the housing 20 ranges from 0.05 mm to 0.20 mm. It may be understood that the battery shell 100 of the present disclosure is thin. In an ordinary soldering process, when the thin-walled shell is molten to fill the gap, soldering holes are likely to be generated, leading to failure of the sealing performance of the battery shell 100. Therefore, in the present disclosure, brazing is used. During the soldering, the battery shell 100 is not molten, to avoid poor soldering problems such as soldering holes, thereby ensuring the integrity of the appearance of the battery shell 100.

In some embodiments, a material of the battery shell 100 is aluminum or steel. A strength of the battery shell 100 can be ensured by using aluminum or steel. In addition, a melting point of aluminum or steel is higher than a melting point of the solder 30a, and a temperature during the soldering process is higher than the melting point of the solder 30a and lower than the melting point of the material of the battery shell 100, so that only the solder 30a is molten and the battery shell 100 is not molten, thereby ensuring the integrity of the appearance of the battery shell 100.

In an embodiment, a distance from the protrusion 11 to an edge of the cover plate 10 increases along a vertical direction toward the inner cavity 21. During assembly of the cover plate 10 and the housing 20, the protrusion 11 of the cover plate 10 first extends into the inner cavity 21 of the housing 20 and moves toward the inner cavity 21, to further guide the assembly of the cover plate 10 and the housing 20.

In this embodiment, along the vertical direction toward the inner cavity 21, the distance between the protrusion 11 and the edge of the cover plate 10 increases. During the assembly, an end of the protrusion 11 is small, which is convenient to extend into the inner cavity 21 and guide mounting of the cover plate 10, thereby reducing the assembly difficulty of the cover plate 10 and the housing 20, and improving the assembly efficiency of the cover plate 10 and the housing 20.

In an embodiment, the cover plate 10 and the housing 20 are in contact with each other, and a gap exists between surfaces that are in contact with each other of the cover plate 10 and the housing 20. After the solder 30a in the first groove 12 is molten, the solder 30a flows into and fills the gap to form the brazing seam 30, so that the cover plate 10 and the housing 20 are connected in a sealed manner.

In an embodiment, the cover plate 10 and the housing 20 are in contact with each other, and a gap exists between surfaces that are in contact with each other of the cover plate 10 and the housing 20. The solder 30a in the first groove 12 is molten and then flows into the gap between the cover plate 10 and the housing 20, so that the cover plate 10 and the housing 20 are connected in a sealed manner. In addition, at least part of the solder 30a retains in the first groove 12, the brazing seam 30 is formed after the solder is 30a cooled, and the brazing seam 30 is provided in the first groove 12.

In another embodiment, the cover plate 10 and the housing 20 are in contact with each other, and the solder 30a in the first groove 12 is molten and forms the brazing seam 30, so that the cover plate 10 and the housing 20 are connected in a sealed manner, and the formed brazing seam 30 is located in the first groove 12.

In some preferred embodiments, as shown in FIG. 3, a distance from a side surface of the first groove 12 of the cover plate 10 away from the outer side wall of the protrusion 11 to the outer side wall of the protrusion 11 is D, and a distance from the top surface 121 of the first groove 12 to the bottom surface 122 is W, where D ranges from 0.2 mm to 1.0 mm, and W ranges from 0.2 mm to 1.0 mm.

It may be understood that excessively large W and D cause excessive solder to flow into the gap between the cover plate 10 and the housing 20, and the excessive solder 30a easily overflows the gap; and excessively small W and D cause insufficient solder 30a to flow into the gap between the cover plate 10 and the housing 20, resulting in an insufficient thickness of the brazing seam 30 formed through cooling and solidifying, and the sealing and protection effect to the inner cavity 21 cannot be ensured. Therefore, by limiting the ranges of W and D, an appropriate amount of solder 30a can be accommodated in the first groove 12. The appropriate amount of solder 30a cannot affect the battery core of the battery of the present disclosure, and can further ensure the quality of the brazing seam 30, thereby achieving sealing of the battery shell 100.

In some preferred embodiments, as shown in FIG. 4, a distance from the top surface 121 to the first surface 101 of the cover plate 10 is L1, and L1 ranges from 0.2 mm to 1.0 mm. In this embodiment, when the cover plate 10 is soldered to the housing 20, the cover plate 10 is located below the housing 20 along the vertical direction, and the solder 30a flows toward the cover plate 10 under the action of gravity. When L1 is excessively small, a thickness of the formed brazing seam 30 along the vertical direction is insufficient, and the sealing performance requirement of the battery shell 100 cannot be met; and when L1 is excessively large, the gap between the cover plate 10 and the housing 20 is excessively large, more solder 30a is required to fill the gap, and a thickness of the formed brazing seam 30 along the vertical direction is insufficient, making it difficult to seal and protect the battery shell 100. A suitable L1 may form a sufficient thickness of the brazing seam 30 to meet the sealing performance requirement of the battery shell 100.

In some other preferred embodiments, as shown in FIG. 4, a distance from the bottom surface 122 to a surface of the protrusion 11 facing the inner cavity 21 is L2, and L2 ranges from 0.2 mm to 1.0 mm. In this embodiment, when the cover plate 10 is soldered to the housing 20, the cover plate 10 is located above the housing 20 along the vertical direction, and the solder 30a flows toward the inner cavity 21 under the action of gravity. A suitable L2 can also form a sufficient thickness of the brazing seam 30 to meet the sealing performance requirement of the battery shell 100.

In some preferred embodiments, as shown in FIG. 5, the cover plate 10 includes a second surface 102 away from the inner cavity 21, an angle between the top surface 121 and the second surface 102 is α1, and α1 ranges from 15 degrees to 45 degrees.

In this embodiment, when the cover plate 10 is soldered to the housing 20, the cover plate 10 is located below the housing 20 along the vertical direction, and the solder 30a flows toward the cover plate 10 under the action of gravity. When α1 is excessively large, a speed at which the molten solder 30a flows into the gap between the cover plate 10 and the housing 20 is excessively fast, which is likely to cause the solder 30a to overflow from a side of the gap away from the inner cavity 21; and when α1 is excessively small, a speed at which the molten solder 30a flows into the gap between the cover plate 10 and the housing 20 is excessively slow, resulting in an increase in soldering time and a decrease in manufacturing efficiency. Therefore, an appropriate α1 helps the molten solder 30a flow from the first groove 12 into the gap between the cover plate 10 and the housing 20 at an appropriate speed.

In some other preferred embodiments, as shown in FIG. 7, an angle between the bottom surface 122 and the second surface 102 of the cover plate 10 is α2, and α2 ranges from 15 degrees to 45 degrees. In this embodiment, when the cover plate 10 is soldered to the housing 20, the cover plate 10 is located above the housing 20 along the vertical direction, and the solder 30a flows toward the inner cavity 21 under the action of gravity. By setting an appropriate α2, the solder 30a can also be caused to flow from the first groove 12 into the gap between the cover plate 10 and the housing 20 at an appropriate speed.

In some preferred embodiments, as shown in FIG. 5, an angle between the first surface 101 of the edge portion of the cover plate 10 facing the inner cavity 21 and the second surface 102 is β1, and β1 ranges from 3 degrees to 15 degrees.

In this embodiment, when the cover plate 10 is soldered to the housing 20, the cover plate 10 is located below the housing 20 along the vertical direction, and the solder 30a flows toward the cover plate 10 under the action of gravity. When β1 is excessively large, a gap at an edge of the cover plate 10 is larger, and more solder 30a is required to fill the gap to seal the cover plate 10 and the housing 20; and when β1 is excessively small, excessively few solder 30a is allowed to retain at the edge portion of the cover plate 10, which is likely to cause an insufficient thickness of the brazing seam 30 on the side away from the inner cavity 21, making it difficult to ensure the sealing performance of the battery shell 100. Therefore, an appropriate β1 helps the molten solder 30a retain at the edge of the cover plate 10.

In some other preferred embodiments, an angle between a surface of the isolating ring 50 away from the inner cavity 21 and the second surface 102 of the cover plate 10 is β2, and β2 ranges from 3 degrees to 15 degrees. In this embodiment, when the cover plate 10 is soldered to the housing 20, the cover plate 10 is located above the housing 20 along the vertical direction, and the solder 30a flows toward the inner cavity 21 under the action of gravity. Setting an appropriate β2 also helps the molten solder 30a retain in the isolating ring 50, thereby preventing the solder 30a from further flowing toward the inner cavity 21.

In some preferred embodiments, a distance between the protrusion 11 and the inner surface of the inner cavity 21 along the horizontal direction ranges from 0.01 mm to 0.20 mm. By setting a distance of the gap between the cover plate 10 and the housing 20 to be within an appropriate range, a space size of the gap can be limited. An excessively large gap space needs to be filled with more solder 30a to seal the battery shell 100, and an excessively small gap space increases the assembly difficulty of the cover plate 10 and the housing 20.

In the specific development of the foregoing various embodiments, a volume of the molten solder 30a flowing into the inner cavity 21 can be controlled, and a volume occupation of the formed brazing seam 30 in the inner cavity 21 can also be controlled. On one hand, this can prevent the solder 30a at a relatively high temperature from coming into contact with the battery core, which may further cause damage to the battery core. On the other hand, it is beneficial to control a size of an internal space of the inner cavity 21, and ensure reliable and sealed connection between the cover plate 10 and the housing 20.

In the description of this specification, the description of the reference terms such as "an embodiment", "some embodiments", "exemplary embodiments", "example", "specific example", or "some examples" means that specific features, structures, materials or characteristics described with reference to the embodiment or example are included in at least one embodiment or example of the present disclosure. In this specification, schematic description of the foregoing terms does not necessarily indicate a same embodiment or example. Moreover, the specific features, structures, materials, or characteristics described may be combined in any one or more embodiments or examples in an appropriate manner.

It should be understood that application of the present disclosure is not limited to the foregoing examples. A person of ordinary skill in the art may make improvements or transformations based on the foregoing description, and all the improvements and transformations shall fall within the protection scope of the appended claims of the present disclosure. A person of ordinary skill in the art may understand that equivalent variations made to implement all or some of the processes of the foregoing embodiments and according to the claims of the present disclosure still fall within the scope of the present disclosure.

## Claims

1. A battery shell, comprising:
a housing, the housing comprising an inner cavity, the inner cavity having an opening, and the cover plate being fixed to the housing and covering the opening; and
a cover plate, a first groove being provided on at least one of a surface of the cover plate facing the housing and a surface of the housing facing the cover plate, a brazing seam being provided between the cover plate and the housing, the brazing seam being configured to connect the housing and the cover plate in a sealed manner, to cause the cover plate to seal the inner cavity, and the first groove being adapted to accommodate solder for forming the brazing seam.

2. The battery shell according to claim 1, wherein the first groove is located on the surface of the cover plate facing the housing.

3. The battery shell according to claim 1 or 2, wherein a protrusion is arranged on a side of the cover plate facing the inner cavity, an outer side wall of the protrusion is contact with an inner surface of the inner cavity, and the first groove is located on the outer side wall of the protrusion.

4. The battery shell according to claim 3, wherein the cover plate further comprises a first surface facing the inner cavity, the first surface being provided around the protrusion, the first groove comprises a top surface facing the first surface, and a distance between the top surface and the first surface decreases along a vertical direction from a middle portion of the cover plate to the inner surface of the inner cavity.

5. The battery shell according to claim 3, wherein a thickness of an edge portion of the cover plate increases along the vertical direction from the middle portion of the cover plate to the inner surface of the inner cavity.

6. The battery shell according to claim 3, wherein the cover plate further comprises a first surface facing the inner cavity, the first surface being provided around the protrusion, the first groove comprises a bottom surface away from the first surface, and the brazing seam is higher than or flush with the bottom surface along a vertical direction.

7. The battery shell according to claim 3, wherein the cover plate further comprises a first surface facing the inner cavity, the first surface being provided around the protrusion, the first groove comprises a bottom surface away from the first surface, and a distance between the bottom surface and the first surface increases along a vertical direction from a middle portion of the cover plate to the inner surface of the inner cavity.

8. The battery shell according to claim 3, wherein the housing comprises an isolating ring, the isolating ring is arranged on the inner surface of the inner cavity and extends toward a center of the inner cavity, and the isolating ring is insulated from the protrusion along a vertical direction,
preferably wherein an inner edge of the isolating ring is located above an outer edge of the isolating ring along the vertical direction; and/or
the isolating ring extends along a horizontal direction and is provided with a second groove, and the second groove is located on a surface of the isolating ring facing the cover plate.

9. The battery shell according to claim 3, wherein the cover plate further comprises a first surface facing the inner cavity, the first surface being provided around the protrusion, the cover plate comprises a third groove, the third groove is located on the first surface, and the third groove is provided on an outer side of the protrusion along a circumferential direction.

10. The battery shell according to claim 1, wherein a gap exists between the two surfaces of the cover plate and the housing that are in contact with each other, and the brazing seam is located in the gap to connect the cover plate and the housing in a sealed manner.

11. The battery shell according to claim 1 or 10, wherein the brazing seam is provided in the first groove.

12. The battery shell according to claim 1, wherein a thickness of a housing wall of the housing ranges from 0.05 mm to 0.20 mm.

13. A battery, comprising a battery core and the battery shell according to any one of claims 1 to 12, and the battery core being fixed in the inner cavity of the battery shell.

14. A battery pack, comprising the battery according to claim 13 and a battery pack shell, and the battery being arranged in the battery pack shell.

15. A power consuming system, comprising the battery according to claim 13 or the battery pack according to claim 14.
